# EUROPÄISCHE PATENTSCHRIFT

(11) **EP 3 576 929 B1**
(45) Veröffentlichungstag und Bekanntmachung des Hinweises auf die Patenterteilung: **21.09.2022**
(21) Anmeldenummer: 17816856.3
(22) Anmeldetag: 19.12.2017
(51) Int. Cl.: B29C 73/16, B60C 19/12, B29C 73/20

(54) **SELBSTTÄTIG ABDICHTENDES REIFENDICHTMITTEL UND FAHRZEUGLUFTREIFEN ENTHALTEND DAS REIFENDICHTMITTEL**
AUTOMATICALLY SEALING TIRE SEALANT AND VEHICLE PNEUMATIC TIRE CONTAINING THE TIRE SEALANT
AGENT D'ÉTANCHÉITÉ POUR PNEUMATIQUE À ÉTANCHÉITÉ AUTOMATIQUE ET PNEUMATIQUE DE VÉHICULE CONTENANT L'AGENT D'ÉTANCHÉITÉ POUR PNEUMATIQUE

(30) Priorität: 06.02.2017 DE 102017201798
(43) Veröffentlichungstag der Anmeldung: 11.12.2019
(73) Patentinhaber: Continental Reifen Deutschland GmbH, 30165 Hannover (DE)
(72) Erfinder: DAHLKE, Markus, 31515 Wunstorf (DE); GUARDALABENE, Joe, 30659 Hannover (DE); SCHLEER, Nadja, 30451 Hannover (DE)
(74) Vertreter: Continental Corporation
(86) Internationale Anmeldenummer: PCT/EP2017/083414
(87) Internationale Veröffentlichungsnummer: WO 2018/141454

(56) Entgegenhaltungen:
- EP-A2- 0 102 844
- EP-A2- 0 142 047
- EP-A2- 0 161 201
- EP-A2- 2 562 009
- US-A1- 2016 068 031

## Beschreibung

Die Erfindung betrifft ein selbsttätig abdichtendes Reifendichtmittel und einen Fahrzeugluftreifen enthaltend das Reifendichtmittel.

Selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel zeichnet sich durch Luftdichtigkeit, starke Klebrigkeit und ausgewogenes Fließverhalten aus.

In der WO 2008/141848 A1 ist ein Verfahren zur Herstellung eines Reifendichtmittels offenbart, wobei dieses aus zwei Dichtmittelkomponenten A und B hergestellt wird.

In der DE 102007028932 A1 ist ein Fahrzeugluftreifen offenbart, dessen Dichtmittel auf Basis einer viskosen Mischung auf Basis eines Butylkautschukes und eines Polybutens ausgeführt sein kann.

Aus Druckschriften EP 0 142 047 A2 und US 2016/068031 A1 sind selbstdichtende Reifendichtmittel bekannt, die mindestens ein Polyolefin (Polybuten) enthalten.

Bei der Zusammensetzung des Dichtmittels ist jedoch zu beachten, dass es einerseits ein gutes Fließverhalten und insbesondere eine ausreichende Ortsfestigkeit aufweist, aber andererseits gleichzeitig eine gute Prozessierbarkeit bei der Herstellung zeigt. Dies gilt insbesondere für hohe Temperaturen von mehr als 30 °C, die im Reifen durch hohe Außentemperaturen und/oder hohe lokale Temperaturen im Fahrbetrieb auftreten können.

Der vorliegenden Erfindung liegt daher die Aufgabe zugrunde, ein selbsttätig abdichtendes Reifendichtmittel bereitzustellen, welches, insbesondere bei vergleichsweise hohen Temperaturen von mehr als 30 °C, hinsichtlich des Fließverhaltens und der Ortsfestigkeit optimiert ist, ohne, dass Schwierigkeiten bei der Herstellung auftreten. Gleichzeitig soll das Dichtmittel eine ausreichende Elastizität und Klebrigkeit besitzen, um eine Einstichstelle im Pannenfall optimal abzudichten. Die Dichtwirkung des Dichtmittels soll somit optimiert werden. Gelöst wird diese Aufgabe dadurch, dass das Dichtmittel 3,6 bis 10 Gew.-% wenigstens eines Klebrigmachers und 50 bis 64,5 Gew.-% wenigstens eines Polyolefins und zudem wenigstens folgende Bestandteile enthält:- Wenigstens einen Kautschuk und- Wenigstens einen Füllstoff und- Wenigstens einen Vernetzer und- Wenigstens einen Vernetzungsinitiator,wobei es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR) handelt.

Es hat sich überraschenderweise herausgestellt, dass durch die Kombination der genannten Bestandteile und deren Mengen ein Dichtmittel bereitgestellt wird, welches sich insbesondere bei hohen Temperaturen während der Anwendung, insbesondere im Reifen, durch ein optimiertes Fließverhalten und gleichzeitig sehr guter Dichtwirkung auszeichnet, und welches zudem ohne zusätzlichen Aufwand hergestellt werden kann. Das erfindungsgemäße Dichtmittel weist insbesondere eine Optimierung hinsichtlich des Fließverhaltens und der Ortsfestigkeit und damit hinsichtlich der Dichtwirkung im Pannenfall auf.

Im Folgenden werden die Bestandteile des erfindungsgemäßen Dichtmittels näher erläutert.

Gemäß vorliegender Erfindung enthält das selbsttätig abdichtende Reifendichtmittel 3,6 bis 10 Gew.-% wenigstens eines Klebrigmachers. Bevorzugt beträgt die Menge des wenigstens einen Klebrigmachers 3,6 bis 8 Gew.-%, besonders bevorzugt 3,6 bis 6 Gew.-%, ganz besonders bevorzugt 3,6 bis 5,3 Gew.-%, wiederum bevorzugt 3,6 bis 4,9 Gew.-%, wobei auch ein Gemisch von zwei oder mehreren Klebrigmachern denkbar ist. Die angegebene Menge bezieht sich auf die Gesamtmenge an enthaltenen Klebrigmachern.

Mit den bevorzugten Mengen werden besonders gute Eigenschaften des Dichtmittels, insbesondere ein optimiertes Fließverhalten bei gleichzeitig guter Klebrigkeit, erzielt, wobei die angegebenen bevorzugten Mengenbereiche bis zu 3,6 bis 4,9 Gew.-% eine weitere Optimierung darstellen.

Unter Klebrigmacher wird im Rahmen der vorliegenden Erfindung eine Substanz verstanden, die die Klebrigkeit des Dichtmittels erhöht. Bevorzugt ist der Klebrigmacher wenigstens ein Kohlenwasserstoffharz (kurz Harz), welches ausgewählt ist aus der Gruppe bestehend aus Petroleumharzen, Kohlenteerharzen, Terpenharzen und natürlichen Harzen.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.

Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.

Das Kohlenwasserstoffharz kann ein Homopolymer oder ein Copolymer sein. Unter Homopolymer wird in der vorliegenden Anmeldung ein Polymer verstanden, welches gemäß Römpp Online (Auszug vom 02.01.2017, letzte Aktualisierung des Artikels August 2008) "aus Monomeren nur einer Art entstanden ist".

Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

Bei den Monomeren kann es sich um alle dem Fachmann bekannten Monomere von Kohlenwasserstoffharzen handeln, wie aliphatische Monomere, insbesondere aliphatische C₅-Monomere, weitere ungesättigte Verbindungen, die kationisch polymerisiert werden können, enthaltend Aromaten und/oder Terpene und/oder Alkene und/oder Cycloalkene.

Bevorzugte Monomere sind insbesondere C₅ und C₉-Monomere.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln. Bevorzugt handelt es sich bei den aromatischen Monomeren um alpha-Methylstyrol und/oder Styrol und/oder Vinyltoluol und/oder Inden und/oder Cumaron und/oder Methylinden und/oder Methylcumaron.

Gemäß einer bevorzugten Ausführungsform der Erfindung weist der wenigstens eine Klebrigmacher kein phenolisches Kohlenwasserstoffharz auf, bzw. basiert der Klebrigmacher bevorzugt nicht auf Phenol als Monomer.

Gemäß Römpp Online ist der Begriff "Olefine" die "Gruppenbezeichnung für acyclische und cyclische aliphatische Kohlenwasserstoffe mit einer oder mehreren reaktiven C=C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.

Bei den Alkenen kann es sich beispielsweise um 1-Buten und/oder 2-Buten und/oder Butadien handeln.

Gemäß einer bevorzugten Ausführungsform der Erfindung handelt es sich bei dem Klebrigmacher um wenigstens ein aliphatisches Harz, also ein Harz welches keine aromatischen Ringsysteme enthält. Ein derartiges Harz besteht zu 100 Gew.-% aus aliphatischen Monomeren bzw. dessen Derivaten.

Gemäß einer weiteren Ausführungsform der Erfindung besteht das Harz zu 10 bis 99 Gew.-%, bevorzugt 50 bis 99 Gew.-%, besonders bevorzugt 70 bis 99 Gew.-%, aus aliphatischen und zu 1 bis 90 Gew.-%, bevorzugt 1 bis 50 Gew.-%, besonders bevorzugt 1 bis 30 Gew.-% aus aromatischen Monomeren.

Gemäß einer besonders bevorzugten Ausführungsform der Erfindung handelt es sich bei dem Klebrigmacher um wenigstens ein Harz, welches wenigstens aus C₅-Monomeren aufgebaut ist und dem Fachmann als sogenanntes C₅-Harz bekannt ist. Hiermit werden besonders gute Eigenschaften des Dichtmittels, insbesondere ein optimiertes Fließverhalten bei gleichzeitig guter Klebrigkeit, erzielt. Die Vorteile zeigen sich insbesondere im Vergleich zu Phenolharzen (phenolischen Harzen) als Klebrigmacher.

Bei den aliphatischen C₅-Monomeren kann es sich um Monomere der C₅-Erdölfraktion, z.B. Isopren, und/oder Monomere der Terpene und/oder Cycloolefine und/oder Olefine, wie z.B. Penten, handeln. Unter C₅ ist zu verstehen, dass diese Monomere aus fünf Kohlenstoffatomen aufgebaut sind.

Ferner ist dem Fachmann bekannt, dass die C₅-Erdölfraktion außer aliphatischen Monomeren mit fünf Kohlenstoffatomen andere aliphatische Monomere (Bausteine) mit z.B. vier, also C₄-Monomere, oder sechs Kohlenstoffatomen, C₆-Monomere, enthalten kann.

Gemäß vorliegender Erfindung enthält das selbsttätig abdichtende Reifendichtmittel 50 bis 64,5 Gew.-% wenigstens eines Polyolefins. Bevorzugt beträgt die Menge des wenigstens einen Polyolefins 55 bis 64,5 Gew.-%. Mit einer Menge von 50 bis 64,5 Gew.-%, bevorzugt 55 bis 64,5 Gew.-%, wird ein optimales Fließverhalten bei einer gleichzeitig guten Herstellbarkeit (Prozessierbarkeit) des Dichtmittels erzielt.

Das wenigstens eine Polyolefin des Reifendichtmittels weist bevorzugt ein Zahlenmittel der Molekulargewichtsverteilung Mn gemäß GPC von 400 bis 2500 g/mol, besonders bevorzugt 400 bis 1600 g/mol, ganz besonders bevorzugt 400 bis 1400 g/mol, wiederum bevorzugt 1000 bis 1400 g/mol, wiederum besonders bevorzugt 1100 bis 1400 g/mol, beispielsweise 1300 g/mol, auf.

Ein Polyolefin mit den genannten Bereichen für das Mn ist besonders geeignet, um die gewünschte Fließfähigkeit bei gleichzeitiger Abdichtwirkung des Dichtmittels im Pannenfall zu erzeugen.

Hierbei ist es besonders bevorzugt, dass das wenigstens eine Polyolefin wenigstens ein Polybuten ist.

Dieses stellt die Klebrigkeit des fertigen Dichtmittels ein und bestimmt die Fließfähigkeit im Produktionsprozess sowie die lokale Ortsfestigkeit des fertigen Dichtmittels.

Es kann sich auch um ein Gemisch zweier oder mehrerer Polybutene mit jeweils einem Mn von 400 bis 2500 g/mol handeln, wobei sich die Polybutene im Mn unterscheiden können.

Im Falle eines Gemisches aus zwei oder mehreren Polybutenen ist es bevorzugt, dass wenigstens ein Polybuten mit einem Mn von 1000 bis 1400 g/mol, bevorzugt 1100 bis 1400 g/mol, besonders bevorzugt 1200 g/mol bis 1400 g/mol, enthalten ist. Bevorzugt ist dieses Polybuten mit mehr als 50 Gew.-%, besonders bevorzugt mehr als 60 Gew.-%, ganz besonders bevorzugt mehr als 70 Gew.-%, wiederum bevorzugt mehr als 80 Gew.-% bezogen auf die Gesamtmenge an enthaltenen Polybutenen enthalten. D. h., dass wenigstens ein Poybuten mit einem Mn von 1000 bis 1400 g/mol etc. bevorzugt den Hauptanteil an enthaltenen Polybutenen ausmacht.

Hierdurch werden besonders gute Fließeigenschaften und eine gute Orstfestigkeit des Dichtmittels und somit eine sehr gute Dichtwirkung des Dichtmittels erzielt. Gemäß einer bevorzugten Ausführungsform der Erfindung enthält das Dichtmittel wenigstens ein Polybuten mit einem Mn von 1000 bis 1400 g/mol und wenigstens ein Polybuten mit einem Mn von 400 bis 1000 g/mol, bevorzugt 400 bis 800 g/mol. Hierdurch ergibt sich eine gute Prozessierbarkeit der Dichtmittelzusammensetzung während der Herstellung.

Das Polybuten mit einem Mn von von 400 bis 1000 g/mol, bevorzugt 400 bis 800 g/mol ist dabei zu weniger als 50 Gew.-%, bevorzugt weniger als 40 Gew.-%, besonders bevorzugt weniger als 30 Gew.-%, wiederum bevorzugt weniger als 20 Gew.-% bezogen auf die Gesamtmenge an enthaltenen Polybutenen enthalten. Hierdurch ergibt sich ein besonders gutes Eigenschaftsprofil hinsichtlich Dichtwirkung (Fließverhalten und Ortsfestigkeit) und Prozessierbarkeit des Dichtmittels.

Die Gesamtmenge an enthaltenen Polybutenen bezogen auf die Dichtmittelzusammensetzung beträgt in jedem Fall wie oben ausgeführt 50 bis 64,5 Gew.-%, bevorzugt 55 bis 64,5 Gew.-%.

Es ist auch ein Gemisch wenigstens eines Polybutens mit wenigstens einem weiteren Polyolefin denkbar. Die Gesamtmenge an enthaltenen Polyolefinen beträgt in jedem Fall wie oben ausgeführt 50 bis 64,5 Gew.-%, bevorzugt 55 bis 64,5 Gew.-%.

Gemäß einer besonders vorteilhaften Weiterbildung der Erfindung weist das wenigstens eine Polyolefin einen Chlorgehalt von kleiner oder gleich 5 mg/kg, bevorzugt kleiner oder gleich 3 mg/kg, auf. Die Angabe bezieht sich auf mg Chlor pro einem kg des Polyolefins. In einer bevorzugten Ausführungsform der Erfindung enthält das selbsttätig abdichtende Reifendichtmittel wenigstens ein Polyolefin mit einem Chlorgehalt von kleiner oder gleich 1,5 mg/kg, besonders bevorzugt kleiner als 1 mg/kg. Bevorzugt ist das Polyolefin hierbei ein Polybuten.

Gemäß einer besonders bevorzugten Ausführungsform der Erfindung enthält das Dichtmittel somit wenigstens ein Polybuten mit einem Chlorgehalt von kleiner oder gleich 5 mg/kg, bevorzugt kleiner oder gleich 3 mg/kg, besonders bevorzugt kleiner als 1 mg/kg. Geeignete Polybutene, auch Polyisobutene genannt, sind beispielsweise unter den Handelsnamen Glissopal^{®} der Firma BASF bekannt. Insbesondere geeignet sind hierbei Glissopal^{®} V-500, V-640 oder V-190.

Das Dichtmittel enthält:
- Wenigstens einen Kautschuk und
- Wenigstens einen Füllstoff und
- Wenigstens einen Vernetzer und
- Wenigstens einen Vernetzungsinitiator.

Bevorzugt basiert das Dichtmittel somit auf der Vernetzung eines Kautschuks mit einem Vernetzer.

Dem Fachmann ist klar, dass die genannten Bestandteile im vernetzten Dichtmittel zumindest teilweise in chemisch veränderter Form, insbesondere als Derivate, vorliegen.

Die Menge des wenigstens einen Kautschuks beträgt bevorzugt 15 bis 20 Gew.-% bezogen auf die Gesamtmenge an Dichtmittel.

Gemäß der Erfindung handelt es sich bei dem Kautschuk in Verfahrensschritt a) um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR). Diese Kautschuktypen sind für die Verarbeitungstemperaturen bei der Herstellung des Reifendichtmittels und später bei der Anwendung im Reifen besonders gut geeignet.

Besonders bevorzugt wird wenigstens Butylkautschuk (IIR) verwendet. Butylkautschuk eignet sich besonders gut, da er eine vergleichsweise hohe Luftdichtigkeit aufweist.

Die Menge des wenigstens einen Füllstoffs beträgt bevorzugt 7 bis 14 Gew.-%, besonders bevorzugt 11 bis 14 Gew.-%, bezogen auf die Gesamtmenge an Dichtmittel.

Bei dem Füllstoff kann es sich um alle dem Fachmann bekannten Füllstoffe handeln, wie insbesondere Ruß und/oder Kieselsäure.

Gemäß einer bevorzugten Ausführungsform der Erfindung umfasst der Füllstoff in wenigstens einen Ruß. Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Hierbei kann es sich um alle dem Fachmann bekannten Rußtypen handeln, wie insbesondere und bevorzugt ein Ruß des Typs N326.

Insbesondere durch die Kombination eines Vernetzers mit einem Vernetzungsinitiator wird ein besonders wirksames, im Pannenfall schnell abdichtendes Reifendichtmittel erhalten.

Die Menge des wenigstens einen Vernetzers beträgt bevorzugt 0,6 bis 1,2 Gew.-%, besonders bevorzugt 0,9 bis 1,2 Gew.-%, bezogen auf die Gesamtmenge an Dichtmittel.

Gemäß einer bevorzugten Ausführungsform der Erfindung ist der Vernetzer ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Mit den bevorzugten und besonders bevorzugten Vernetzern wird eine extrem schnelle Vernetzung bei relativ niedrigen Temperaturen erzielt. Dies ermöglicht bei der Herstellung des Dichtmittels eine Anwendung von Rezepten mit niedrigen Viskositäten die schnell nach dem Aufbringen des Materials in den Reifen ortsfest sind.

Die Menge des wenigstens einen Vernetzungsinitiators beträgt bevorzugt 0,5 bis 1,6 Gew.-%, besonders bevorzugt 1,2 bis 1,6 Gew.-%, bezogen auf die Gesamtmenge an Dichtmittel.

Der Vernetzungsinitiator ist eine chemische Verbindung, welche die Vernetzung des Dichtmittels initiiert. Bei dem Vernetzungsinitiator kann es sich beispielsweise und bevorzugt um Bleioxid oder andere Metalloxide oder eine peroxidische Verbindung handeln.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, d. h. z. B., dass in den oben genannten 0,5 bis 1,6 Gew.-% wenigstens eines Vernetzungsinitiators Begleitsubstanzen wie Dibutylmaleat nicht eingerechnet sind.

Das Dichtmittel kann ferner weitere Bestandteile enthalten, wie insbesondere Weichmacher, wie z. B. Öl(e), sowie gegebenenfalls weitere Zusatzstoffe, wie z. B. Farbpigmente und/oder Zinkoxid und/oder Schwefel und/oder Mikrosphären und/oder Glaskugeln und/oder Plastikpartikel.

Bevorzugt enthält das Dichtmittel wenigstens einen Weichmacher, und zwar bevorzugt in Mengen von 2 bis 4 Gew.-%.

Bei dem Weichmacher kann es sich um alle dem Fachmann bekannten Weichmacher, insbesondere Öle, handeln, wie insbesondere aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346. Mineralöle sind als Weichmacher besonders bevorzugt.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Gemäß einer vorteilhaften Ausführungsform der Erfindung enthält das Dichtmittel folgende Bestandteile in folgenden Mengen:
- 55 bis 64,5 Gew.-% wenigstes eines Polyolefins, bevorzugt wenigstens eines Polybutens, und
- 3,6 bis 6 Gew.-% wenigstens eines Klebrigmachers und
- 15 bis 20 Gew.-% wenigstens eines Kautschuks und
- 8,7 bis 14 Gew.-% wenigstens eines Füllstoffs und
- 2 bis 4 Gew.-% wenigstens eines Weichmachers und
- 0,9 bis 1,2 Gew.-% wenigstens eines Vernetzers und
- 1,2 bis 1,6 Gew.-% wenigstens eines Vernetzungsinitiators.

Die Angaben in Gew.-% beziehen sich jeweils auf die Gesamtmenge an Dichtmittel.

Das erfindungsgemäße Reifendichtmittel kann beispielsweise und bevorzugt durch ein Verfahren hergestellt werden, welches wenigstens die folgenden Verfahrensschritte umfasst:
a) Vermischen wenigstens eines Kautschuks mit wenigstens einem Füllstoff zur Herstellung eines Masterbatches; und
b) Vermischen des Masterbatches mit wenigstens einem Polyolefin zur Herstellung einer Komponente A; und
c) Bereitstellung einer Komponente B enthaltend wenigstens einen Vernetzungsinitiator; und
d) Vermischen von Komponente A und Komponente B zur Herstellung des Reifendichtmittels.

Für sämtliche Bestandteile und Mengen gelten die oben getroffenen Ausführungen, wenn es nicht explizit anders erwähnt ist.

In Verfahrensschritt a) wird zunächst ein Masterbatch hergestellt, welcher wenigstens einen Kautschuk und wenigstens einen Füllstoff enthält. Für Kautschuk und Füllstoff gelten sämtliche oben getroffene Ausführungen. Besonders bevorzugt wird in Verfahrensschritt a) wenigstens Butylkautschuk (IIR) verwendet. Butylkautschuk eignet sich besonders gut, da er eine vergleichsweise hohe Luftdichtigkeit aufweist.

In Verfahrensschritt a) können weitere Bestandteile wie oben ausgeführt hinzugegeben werden, wie Verarbeitungshilfsmittel, insbesondere der erfindungsgemäß enthaltene Klebrigmacher und/oder wenigstens ein Weichmacher sowie gegebenenfalls weitere Zusatzstoffe.

Verfahrensschritt a) kann dabei in einer oder mehreren Mischstufen durchgeführt werden.

In Verfahrensschritt a) kann bevorzugt und insbesondere auch wenigstens ein Vernetzer hinzugefügt werden, wobei ebenfalls auf die bereits getroffenen Ausführungen zu dem/den Vernetzer(n) verwiesen wird.

Der in Schritt a) hergestellte Masterbatch wird in Verfahrensschritt b) mit wenigstens einem Polyolefin vermischt, wodurch die Komponente A hergestellt wird.

Das wenigstens eine Polyolefin ist besonders bevorzugt wenigstens ein Polybuten, wie auch oben für das Dichtmittel ausgeführt. Dieses stellt die Klebrigkeit des fertigen Dichtmittels ein und bestimmt die Fließfähigkeit der Komponente A im Produktionsprozess sowie die lokale Ortsfestigkeit des fertigen Dichtmittels. Bevorzugt ist wenigstens ein Polyolefin, bevorzugt Polybuten, mit einem Zahlenmittel der Molekulargewichtsverteilung Mn gemäß GPC von 400 bis 2500 g/mol, besonders bevorzugt 1000 bis 1600 g/mol, wiederum besonders bevorzugt 1200 bis 1400 g/mol, insbesondere beispielhaft 1300 g/mol.

Bevorzugt erfolgt die Herstellung von Komponente A in Verfahrensschritt b) in einem Knetextruder oder einem Doppelschneckenextruder. Hierdurch wird eine ausreichende Durchmischung des nahezu festen Masterbatches mit dem niederviskosen Polyolefin erzielt. Die genannten Extruder sind somit für die Verarbeitung hoher Viskositäten besonders geeignet. Es sind aber auch andere hierfür geeignete Vorrichtungen denkbar.

Besonders bevorzugt erfolgt die Herstellung von Komponente A in Verfahrensschritt b) in einem Doppelschneckenextruder.

In Verfahrensschritt c) erfolgt die Bereitstellung einer Komponente B enthaltend wenigstens einen Vernetzungsinitiator, wobei für diesen auf die oben getroffenen Ausführungen verwiesen wird.

Bevorzugt ist in Verfahrensschritt c) in Komponente B wenigstens ein Polyolefin, bevorzugt wenigstens ein Polybuten, enthalten. Das bedeutet, dass bevorzugt auch über die Komponente B wenigstens ein Polyolefin, bevorzugt wenigstens ein Polybuten, dem Dichtmittel zugegeben wird.

Hierdurch werden eine optimale Klebrigkeit, Fließfähigkeit sowie lokale Ortsfestigkeit des fertigen Dichtmittels eingestellt und gleichzeitig kann auf sonstige Bestandteile verzichtet werden, die ein größeres Potenzial zur Umweltgefährdung darstellen könnten.

Das Zahlenmittel der Molekulargewichtsverteilung Mn gemäß des in Schritt c) in Komponente B bereitgestellten Polyolefins, bevorzugt Polybutens, kann sich dabei von dem Mn des Polyolefins in Schritt b) unterscheiden.

Bei der Zugabe von Polyolefin(en) in wenigstens zwei verschiedenen Verfahrensschritten, wie gezeigt beispielsweise b) und c), beziehen sich die angegebenen erfindungsgemäßen und dabei bevorzugten Mengen (s. oben) auf die Gesamtmenge an Polyolefin(en) im Dichtmittel.

Das erfindungsgemäße Dichtmittel enthält 50 bis 64,5 Gew.-% wenigstens eines Polyolefins. Ein Vorteil der Erfindung ist darin zu sehen, dass diese vergleichsweise geringe Menge an Polyolefin(en) während der Herstellung des Dichtmittels zugegeben werden kann, ohne dass sich Schwierigkeiten in der Prozessierbarkeit ergeben, insbesondere und beispielsweise, wenn das Polyolefin wie beschrieben in den Schritten b) und c) zugegeben wird.

Insbesondere in Verfahrensschritt b), also bei der Herstellung der Komponente A, kann die Menge des Polyolefins ohne Auswirkungen auf die Prozessierbarkeit und die erforderlichen Vorrichtungen reduziert werden. Die Komponente A wird in der Folge mit einer höheren Viskosität bereitgestellt.

In Verfahrensschritt d) erfolgt das Vermischen von Komponente A und Komponente B zur Herstellung des Reifendichtmittels.

Sonstige Verfahrensschritte und Vorrichtungen sind bevorzugt wie in der WO 2008/141848 offenbart ausgeführt.

Ein weiterer Gegenstand der vorliegenden Erfindung ist ein Fahrzeugluftreifen, der das erfindungsgemäße Reifendichtmittel inklusive aller genannten Ausführungen wenigstens auf der dem Laufstreifen gegenüberliegenden Innenfläche aufweist.

Im Folgenden soll die Erfindung anhand von Beispielen erläutert werden.

In der Tabelle 1 sind wesentliche Bestandteile des Dichtmittels in Gew.-% bezogen auf die Gesamtmenge an Dichtmittel aufgeführt. Die mit "V" gekennzeichneten Beispiele stellen Vergleichsbeispiele dar während es sich bei den mit "E" gekennzeichneten um erfindungsgemäße Beispiele handelt. In Tabelle 1 sind die komplexen Viskositäten und das Kriechverhalten gemäß folgender Methoden der Beispiele einander gegenübergestellt:
- Komplexe Viskosität bei 60 °C, Temperaturdurchlauf, Platte-Platte-Rheometer, 1 Hz
- Komplexe Viskosität bei 0,02 Hz, Frequenzdurchlauf, Platte-Platte-Rheometer, 100 °C
- Kriechverhalten: zurückgelegte Weglänge eines Massehaufens von jeweils 0,32 g der Dichtmittelzusammensetzungen über einen Zeitraum von 0,5 h bei 125 °C (Angabe in mm)

### Verwendete Substanzen

a) Butyl-Kautschuk
b) Ruß N326
c) Polybuten: mehr als 80 Gew.-% Indopol H-300, Fa. Ineos, Mn = 1300 g/mol und kleiner 20 Gew.-% Indopol H-25 der Firma Ineos, Mn = 635 g/mol
d) Kohlenwasserstoffharz: C₅-Harz, Escorez ^{™} 1102, Fa. ExxonMobil
e) paraffinisches Öl
f) Zinkoxid
g) Chinondioxim
h) Dibenzoylperoxid-Lösung (50 Gew.-% Dibenzoylperoxid in Dibutylmaleat): z. B. 2,3 Gew.-% (wie in V1) dieses Gemisches bedeuten somit 1,15 Gew.-% Dibenzoylperoxid als Vernetzungsinitiator

Wie in Tabelle 1 erkennbar ist, zeigen die erfindungsgemäße Beispiele E1 bis E3 höhere komplexe Viskositäten als die Vergleichsbeispiele und gleichzeitig eine verbesserte Ortsfestigkeit bei vergleichsweise hohen Temperaturen, was an dem verbesserten Kriechverhalten (geringere Weglänge) erkennbar ist.

Die erfindungsgemäßen Dichtmittelzusammensetzungen sind somit hinsichtlich des Fließverhaltens und der Ortsfestigkeit und damit hinsichtlich der Dichtwirkung im Pannenfall, insbesondere bei hohen Temperaturen, optimiert.

Ein Fahrzeugreifen, der die optimierten erfindungsgemäßen Dichtmittelzusammensetzungen wenigstens auf der dem Laufstreifen gegenüberliegenden Innenfläche aufweist, ist im Pannenfall besser abgedichtet und somit sicherer.

**Tabelle 1**

| **Bestandteile** | **Einheit** | **V1** | **V2** | **E1** | **E2** | **E3** |
|---|---|---|---|---|---|---|
| Kautschuk ^{a)} | Gew.-% | 14,4 | 14,3 | 15,2 | 16,6 | 17,8 |
| Füllstoff ^{b)} | Gew.-% | 10,2 | 10,1 | 10,8 | 11,5 | 12,4 |
| Polyolefin ^{c)} | Gew.-% | 65,9 | 65,4 | 63,2 | 60,1 | 57,5 |
| Klebrigmacher ^{d)} | Gew.-% | 2,9 | 3,6 | 3,8 | 4,2 | 4,5 |
| Weichmacher ^{c)} | Gew.-% | 2,6 | 2,6 | 2,6 | 2,8 | 2,8 |
| ZnO ^{f)} | Gew.-% | 0,7 | 0,7 | 0,8 | 0,9 | 0,9 |
| Vernetzer ^{g)} | Gew.-% | 0,8 | 0,8 | 0,9 | 0,9 | 1,0 |
| Vernetzungsinitiator h) | Gew.-% | 2,3 | 2,3 | 2,5 | 2,7 | 2,8 |
| Schwefel | Gew.-% | 0,2 | 0,2 | 0,2 | 0,3 | 0,3 |
| | | | | | | |

| **Eigenschaften** | | | | | | |
|---|---|---|---|---|---|---|
| Komplexe Viskosität 60 °C | Pa^{∗}s | 1185 | 1184 | 1623 | 2004 | 2473 |
| Komplexe Viskosität 0,02 Hz | Pa^{∗}s | 5321 | 4611 | 8135 | 11924 | 17271 |
| Kriechverhalten | mm | 5,3 | 8,0 | 3,6 | 2,2 | 1,4 |

## Patentansprüche

1. Selbsttätig abdichtendes Reifendichtmittel, **dadurch gekennzeichnet, dass** es 3,6 bis 10 Gew.-% wenigstens eines Klebrigmachers und 50 bis 64,5 Gew.-% wenigstens eines Polyolefins und zudem wenigstens folgende Bestandteile enthält:
- Wenigstens einen Kautschuk und
- Wenigstens einen Füllstoff und
- Wenigstens einen Vernetzer und
- Wenigstens einen Vernetzungsinitiator,
wobei es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR) handelt.

2. Reifendichtmittel nach Anspruch 1, **dadurch gekennzeichnet, dass** der Klebrigmacher wenigstens ein Kohlenwasserstoffharz ist, welches ausgewählt ist aus der Gruppe bestehend aus Petroleumharzen, Kohlenteerharzen, Terpenharzen und natürlichen Harzen.

3. Reifendichtmittel nach Anspruch 2, **dadurch gekennzeichnet, dass** das Klebharz wenigstens ein C₅-Harz ist.

4. Reifendichtmittel nach einem der vorherigen Ansprüche, **dadurch gekennzeichnet, dass** das wenigstens eine Polyolefin ein Zahlenmittel der Molekulargewichtsverteilung Mn gemäß GPC von 400 bis 2500 g/mol aufweist.

5. Reifendichtmittel nach einem der vorherigen Ansprüche, **dadurch gekennzeichnet, dass** das wenigstens eine Polyolefin wenigstens ein Polybuten ist.

6. Reifendichtmittel nach einem der Ansprüche 1 bis 5, **dadurch gekennzeichnet, dass** der Füllstoff wenigstens einen Ruß umfasst.

7. Reifendichtmittel nach einem der Ansprüche 1 bis 6, **dadurch gekennzeichnet, dass** der Vernetzer ausgewählt ist aus der Gruppe enthaltend Polymethylolharz und Divinylbenzol und Chinonen.

8. Reifendichtmittel nach einem der Ansprüche 1 bis 7, **dadurch gekennzeichnet, dass** der wenigstens eine Vernetzungsinitiator ausgewählt ist aus der Gruppe enthaltend Bleioxid und andere Metalloxide und peroxidische Verbindungen.

9. Fahrzeugluftreifen, der das Reifendichtmittel nach einem der Ansprüche 1 bis 8 wenigstens auf der dem Laufstreifen gegenüberliegenden Innenfläche aufweist.

## Claims

1. Self-sealing tire sealant, **characterized in that** it contains 3.6% to 10% by weight of at least one tackifier and 50% to 64.5% by weight of at least one polyolefin and also at least the following constituents:
- at least one rubber and
- at least one filler and
- at least one crosslinker and
- at least one crosslinking initiator,
wherein the rubber is natural rubber (NR) and/or butadiene rubber (BR) and/or isoprene rubber (IR) and/or styrene-butadiene rubber (SBR) and/or polychloroprene (CR) and/or butyl rubber (IIR) and/or bromobutyl rubber (BIIR) and/or chlorobutyl rubber (CIIR).

2. Tire sealant according to Claim 1, **characterized in that** the tackifier is at least one hydrocarbon resin selected from the group consisting of petroleum resins, coal tar resins, terpene resins and natural resins.

3. Tire sealant according to Claim 2, **characterized in that** the tackifier resin is at least one Cs- resin.

4. Tire sealant according to any of the preceding claims, **characterized in that** the at least one polyolefin has a number-average molecular weight Mn according to GPC of 400 to 2500 g/mol.

5. Tire sealant according to any of the preceding claims, **characterized in that** the at least one polyolefin is a polybutene.

6. Tire sealant according to any of Claims 1 to 5, **characterized in that** the filler comprises at least one carbon black.

7. Tire sealant according to any of Claims 1 to 6, **characterized in that** the crosslinker is selected from the group containing polymethylol resin and divinylbenzene and quinones.

8. Tire sealant according to any of Claims 1 to 7, **characterized in that** the at least one crosslinking initiator is selected from the group containing lead oxide and other metal oxides and peroxidic compounds.

9. Pneumatic vehicle tire containing the tire sealant according to any of Claims 1 to 8 at least on the inner surface opposite the tread.

## Revendications

1. Agent d'étanchéité pour pneumatiques à étanchéité automatique, **caractérisé en ce qu'**il contient de 3,6 à 10 % en poids d'au moins un agent collant et de 50 à 64,5 % en poids d'au moins une polyoléfine, et en outre au moins les composants suivants :
- au moins un caoutchouc et
- au moins une charge et
- au moins un agent de réticulation et
- au moins un initiateur de réticulation,
le caoutchouc consistant en du caoutchouc naturel (NR) et/ou du caoutchouc de butadiène (BR) et/ou du caoutchouc d'isoprène (IR) et/ou du caoutchouc de styrène-butadiène (SBR) et/ou du polychloroprène (CR) et/ou du caoutchouc de butyle (IIR) et/ou du caoutchouc de bromobutyle (BIIR) et/ou du caoutchouc de chlorobutyle (CIIR).

2. Agent d'étanchéité pour pneumatiques selon la revendication 1, **caractérisé en ce que** l'agent collant est au moins une résine hydrocarbonée, qui est choisie dans le groupe constitué par les résines de pétrole, les résines de goudron de houille, les résines terpéniques et les résines naturelles.

3. Agent d'étanchéité pour pneumatiques selon la revendication 2, **caractérisé en ce que** la résine adhésive est au moins une résine en C₅.

4. Agent d'étanchéité pour pneumatiques selon l'une quelconque des revendications précédentes, **caractérisé en ce que** l'au moins une polyoléfine présente une moyenne en nombre de la répartition du poids moléculaire Mn par CPG de 400 à 2 500 g/mol.

5. Agent d'étanchéité pour pneumatiques selon l'une quelconque des revendications précédentes, **caractérisé en ce que** l'au moins une polyoléfine est au moins un polybutène.

6. Agent d'étanchéité pour pneumatiques selon l'une quelconque des revendications 1 à 5, **caractérisé en ce que** la charge comprend au moins un noir de carbone.

7. Agent d'étanchéité pour pneumatiques selon l'une quelconque des revendications 1 à 6, **caractérisé en ce que** l'agent de réticulation est choisi dans le groupe contenant la résine de polyméthylol et le divinylbenzène et les quinones.

8. Agent d'étanchéité pour pneumatiques selon l'une quelconque des revendications 1 à 7, **caractérisé en ce que** l'au moins un initiateur de réticulation est choisi dans le groupe contenant l'oxyde de plomb et d'autres oxydes métalliques et les composés peroxydiques.

9. Pneumatique de véhicule, qui présente l'agent d'étanchéité pour pneumatiques selon l'une quelconque des revendications 1 à 8 au moins sur la surface intérieure opposée à la bande de roulement.
